# FASCICULE DE BREVET EUROPEEN

(11) **EP 3 464 923 B1**
(45) Date de publication et mention de la délivrance du brevet: **26.02.2020**
(21) Numéro de dépôt: 17727640.9
(22) Date de dépôt: 09.05.2017
(51) Int. Cl.: F16D 48/06

(54) **PROCEDE DE CONTROLE DE PATINAGE DE TYPE PIED POSE D'UN EMBRAYAGE DANS UN VEHICULE AUTOMOBILE**
VERFAHREN ZUR STEUERUNG DES FUSSSCHLUPFES EINER KUPPLUNG IN EINEM KRAFTFAHRZEUG
METHOD FOR CONTROLLING FOOT-ON SLIP OF A CLUTCH IN A MOTOR VEHICLE

(30) Priorité: 03.06.2016 FR 1655063
(43) Date de publication de la demande: 10.04.2019
(73) Titulaire: PSA Automobiles SA, 78300 Poissy (FR)
(72) Inventeur: PETIT, Benjamin, 92500 RUEIL MALMAISON (FR); PREVOST, Christophe, 51700 COURTHIEZY (FR)
(86) Numéro de dépôt international: PCT/FR2017/051097
(87) Numéro de publication internationale: WO 2017/207884

(56) Documents cités:
- DE-A1-102013 209 510
- DE-A1-102014 203 680
- DE-A1-102015 012 233
- DE-U1-202013 003 518
- JP-A- S58 156 421

## Description

Le domaine de l'invention concerne un procédé de contrôle de patinage d'un embrayage d'un véhicule automobile. Voir DE102013209510 comme état de la technique.

L'embrayage d'un véhicule automobile est un dispositif de couplage commandé de la transmission mécanique qui est monté entre le vilebrequin du moteur de traction et l'arbre primaire d'une boite de vitesses. Le plus souvent, l'embrayage est piloté au moyen d'une pédale d'embrayage par le conducteur du véhicule pour autoriser ou pour empêcher la transmission du couple moteur aux roues, notamment pour opérer un changement d'un rapport de vitesse. Il est courant que le conducteur laisse son pied posé sur la pédale d'embrayage alors que son actionnement n'est pas nécessaire. Cette situation provoque un patinage de l'embrayage dit « patinage de type pied posé ». Sur le long terme, ces manipulations erronées du conducteur entrainent une usure prématurée de l'embrayage.

On connaît le document GB2510026A qui décrit un procédé de contrôle du patinage comprenant la détection d'un patinage caractéristique d'un patinage de type pied posé. Il comprend notamment la détection de divers paramètres du groupe motopropulseur, notamment la détection d'un écart entre le régime du vilebrequin du moteur thermique et le régime de l'arbre primaire de la boite de vitesses, la détection d'une pression de la pédale d'accélération, la détection d'une pression de la pédale d'embrayage et la durée de ces évènements.

Cependant, ce procédé de contrôle ne permet pas de détecter toutes les situations de patinage de type pied posé, en particulier lorsque le conducteur appuie à répétition et brièvement sur la pédale d'embrayage.

Il existe donc un besoin de palier cet inconvénient pour le contrôle du patinage et de proposer un procédé de détection plus performant afin d'alerter le conducteur.

Plus précisément, l'invention concerne un procédé de contrôle de patinage d'un embrayage, couplant dans une chaine de traction d'un véhicule automobile un moteur thermique et une boite de vitesses, lequel est piloté par le conducteur par un moyen de commande, par exemple une pédale à pied, le procédé comprenant au moins une première détection du patinage et une deuxième détection de l'actionnement du moyen de commande et, en cas d'occurrence simultanée de la première et de la deuxième détection, l'émission d'un signal d'avertissement indiquant une manipulation erronée du moyen de commande. Selon l'invention, la deuxième détection est conditionnée par la mesure d'au moins deux actionnements distincts du moyen de commande séparés d'un intervalle de temps inférieur à un premier seuil de temps prédéterminé.

Avantageusement, la mesure de chacun desdits au moins deux actionnements distincts est inférieure à une valeur d'actionnement prédéterminé.

Selon une variante, la première détection du patinage est conditionnée par la détection d'une durée du patinage supérieure à un deuxième seuil de temps prédéterminé.

Selon une variante, la première détection du patinage est conditionnée par la détection d'une durée du patinage inférieure à un troisième seuil de temps prédéterminé.

Selon une variante, la première détection du patinage est conditionnée par la détection d'une différence entre le régime d'un vilebrequin du moteur thermique et le régime d'un arbre primaire de la boite de vitesses.

Selon une variante, la première détection du patinage est conditionnée par la détection d'une température d'huile et d'une température de liquide de refroidissement du moteur thermique supérieures à un premier et un deuxième seuil de température respectivement.

De préférence, l'émission du signal d'avertissement est désactivée lorsque que l'actionnement du moyen de commande n'est plus détecté, notamment lorsque la pédale à pied est en position de repos.

Selon une variante, le procédé comprend en outre une troisième détection d'un état fermé de la chaine de traction conditionnée par la détection de l'engagement d'un rapport de vitesse de la boite de vitesses.

Selon une variante, en cas d'occurrence d'une quatrième détection conditionnée à une détection d'un couple moteur du moteur thermique supérieur à une valeur de couple prédéterminée, le procédé comprend en outre la limitation de la valeur du couple moteur maximum à une mesure du couple moteur moyen lors de la deuxième détection, et dans lequel la mesure du couple moteur moyen est diminuée d'un coefficient de sécurité.

Il est également prévu selon l'invention un véhicule automobile comprenant une chaine de traction, laquelle comprend un moteur thermique de traction, une boite de vitesses et un embrayage couplant le moteur thermique et la boite de vitesses, un moyen de commande pour piloter l'embrayage, par exemple une pédale à pied, et un superviseur de contrôle, dans lequel le superviseur de contrôle est apte à mettre en œuvre le procédé selon l'un quelconque de ses modes de réalisation.

Grâce à l'invention, la détection des situations de patinage de type pied posé est améliorée, en particulier dans le cas d'appuis répétitifs sur l'embrayage de faible amplitude. L'invention prévoit l'émission d'un signal d'alerte à destination du conducteur afin de prévenir une usure de l'embrayage.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente un groupe motopropulseur de véhicule apte à mettre en œuvre le procédé de contrôle de patinage selon l'invention ;
- la figure 2 représente un diagramme des fonctions de détection du procédé de contrôle selon l'invention.

L'invention proposée vise à réduire les situations de patinage d'un embrayage résultant d'un glissement entre le volant moteur et le disque de friction par lesquels est transmis le couple moteur aux roues. En particulier, l'invention traite le patinage provoqué par des manipulations erronées du conducteur sur le moyen de commande de l'embrayage.

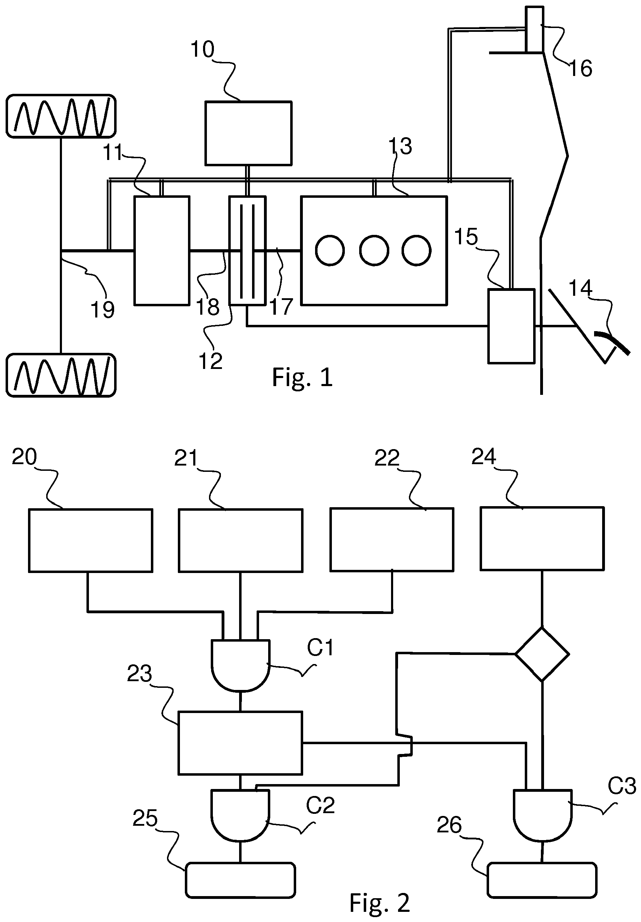

La chaine de traction du groupe motopropulseur du véhicule automobile représenté en figure 1 comprend un moteur thermique de traction 13, un embrayage 12 et une boite de vitesses 11 dont l'arbre secondaire fournit le couple d'entrainement à un train de roues 19. L'embrayage 12 coopère d'une part avec le vilebrequin 17 du moteur thermique 13 et d'autre part avec l'arbre primaire 18 de la boite de vitesses 11 de sorte à transmettre ou interrompre la transmission du couple moteur aux roues du véhicule. L'embrayage 12 est piloté par un moyen de commande 14 manipulable par le conducteur depuis l'habitacle du véhicule. De plus, le moyen de commande 14 est couplé à un circuit d'actionnement hydraulique 15 pour transmettre les consignes d'actionnement du conducteur à l'embrayage 12. Le moyen de commande 14 est par exemple une pédale à pied d'actionnement. Par ailleurs, une interface homme-machine 16 est installée dans l'habitacle pour communiquer des informations de roulage et d'état du groupe motopropulseur au conducteur, par exemple des signaux d'avertissement. L'interface 16 comprend des moyens d'interaction avec le conducteur, à titre d'exemple non limitatif des moyens d'affichage visuel, des moyens sonores et des moyens tactiles et haptiques.

Par ailleurs, un superviseur de contrôle 10, appelé également ECU en anglais pour « Electronic Control Unit », coordonne les équipements du groupe motopropulseur mentionnés précédemment au moyen d'un bus de communication de données, par exemple de type CAN (« Controler Area Network » en anglais). Il comprend des moyens de calcul à circuit intégré aptes à exécuter des fonctions logicielles de pilotage qui sont programmées dans des mémoires, notamment pour la mise en œuvre du procédé de contrôle de patinage de l'embrayage 12 selon l'invention. Les paramètres de roulage du groupe motopropulseur utilisés pour la mise en œuvre du procédé de contrôle du patinage sont mesurables par le superviseur de contrôle 10 au moyen du bus de communication de données et/ou de divers capteurs de mesures déportés au niveau des équipements.

Pour éviter des situations de patinage de type pied posé provoquées par des manipulations erronées du conducteur, le superviseur de contrôle 10 exécute diverses fonctions de détection à partir des paramètres mesurables du groupe motopropulseur. La figure 2 représente les fonctions de détection 20, 21, 22, 23, 24 mises en œuvre par le procédé de contrôle de patinage selon l'invention pour le groupe motopropulseur décrit en figure 1. Le procédé de contrôle exécute des fonctions logiques C1, C2, C3 prenant en entrée le résultat desdites fonctions de détection pour l'émission d'un signal d'avertissement et d'une mesure de traitement du patinage lors des étapes 25, 26.

Le procédé de contrôle du patinage comprend une première détection 20 du patinage et une deuxième détection 21 de l'actionnement du moyen de commande 14, et, en cas d'occurrence simultanée de la première et de la deuxième détection, l'émission d'un signal d'avertissement indiquant une manipulation erronée du moyen de commande 14. L'invention est remarquable en ce que la deuxième détection 21 est conditionnée par la mesure d'au moins deux actionnements distincts du moyen de commande 14 séparés d'un intervalle de temps inférieur à un premier seuil de temps prédéterminé. L'intervalle de temps permet la détection des situations d'appuis répétitifs sur la pédale d'embrayage 14. Plus précisément pour la deuxième détection 21, l'intervalle de temps et le nombre d'actionnement provoquant le patinage sont mesurés et mémorisés au moyen de compteurs logiciels. On précisera qu'un actionnement du moyen de commande 14 correspond par exemple à une course d'appui et une course de retour à la position de repos de la pédale d'embrayage.

De plus, pour la deuxième détection 21 de l'actionnement du moyen de commande 14, la mesure de chacun desdits au moins deux actionnements distincts est inférieure à une valeur d'actionnement prédéterminée. Plus précisément, la position de la pédale d'embrayage 14 pour l'exécution des dits actionnements détectés par la deuxième détection 21 est inférieure à une position d'appui correspondant à un appui total de débrayage. La valeur d'actionnement prédéterminée correspond à une course proche de quelques pourcents de la course totale de la pédale d'embrayage 14, à titre d'exemple non limitatif entre 0% et environ 5% de la course totale de la pédale d'embrayage. Cette condition de détection vise à exclure les appuis correspondant à un débrayage de passage de vitesse.

On notera que la valeur d'actionnement prédéterminée est une position de la pédale d'embrayage, ou une valeur de la pression hydraulique dans l'émetteur et/ou dans le récepteur du circuit d'actionnement hydraulique 15.

De plus, la première détection 20 du patinage est conditionnée par la détection d'une différence entre le régime du vilebrequin 17 du moteur thermique 13 et le régime de l'arbre primaire 18 de la boite de vitesses 11. Plus précisément, la première détection 20, en cas d'une différence ayant une valeur supérieure à une valeur prédéterminée de régime (supérieure à zéro), signale une situation de patinage de l'embrayage 12. Le régime de l'arbre primaire 18 est déterminé à partir des données de roulage connues sur le bus de communication ou par le superviseur de contrôle 10, par exemple à partir du régime des roues du train de roue 19 et du rapport de démultiplication de la boite de vitesses 11. Le régime du vilebrequin 17 est déterminé à partir des fonctions et capteurs de pilotage du moteur thermique 13.

De plus, la première détection 20 du patinage est conditionnée par la détection d'une durée du patinage supérieure à un deuxième seuil de temps prédéterminé, par exemple une durée supérieure à une durée de patinage nécessaire pour l'exécution d'un débrayage pour le passage de vitesse. Le deuxième seuil de temps prédéterminé vise à exclure les détections de patinage intervenant lors d'un fonctionnement normal de l'embrayage 12.

Dans une variante, la première détection 20 du patinage est également conditionnée par la détection d'une durée du patinage inférieure à un troisième seuil de temps prédéterminé. Cette condition supplémentaire vise à détecter les appuis de courte durée intervenant dans l'intervalle de temps prédéterminé. Par exemple, le troisième seuil de temps est d'environ une dizaine ou une vingtaine de secondes.

De plus, la première détection 20 du patinage est conditionnée par la détection d'une température d'huile et d'une température de liquide de refroidissement du moteur thermique 13 supérieures à un premier et un deuxième seuil de température respectivement. Ces conditions supplémentaires améliorent la détection du patinage. En effet, il a été constaté que dans une situation de roulage pour laquelle le moteur thermique 13 fonctionne à froid, la transmissibilité du couple est moins efficace ce qui peut alors provoquer une fausse détection de patinage.

On précisera que le procédé de contrôle de patinage, pour la première détection 20 du patinage 20, peut exécuter selon la variante de réalisation, tout ou une combinaison d'une partie des conditions de détection décrites précédemment.

Par ailleurs, une troisième détection 22 est conditionnée par l'état de fermeture de la chaine de traction, laquelle situation est détectée par l'engagement d'un rapport de vitesses de la boite de vitesses 11. Cette troisième détection est combinée de préférence à la valeur d'actionnement de la pédale d'embrayage 14 au regard de la valeur d'actionnement prédéterminée utilisée également pour la deuxième détection 21. En cas d'occurrence de la troisième détection 22, l'émission du message d'avertissement est autorisée. Dans le cas contraire, l'émission du message d'avertissement est interdite.

En cas d'occurrence de la première et la deuxième 20, 21, et de préférence également de la troisième détection 22, à l'étape 23 le procédé de contrôle de patinage détecte une situation de patinage de type pied posé. Le procédé prévoit dans cette situation l'émission du signal d'avertissement consistant en un message visuel, sonore et/ou haptique à destination du conducteur par l'intermédiaire de l'interface 16. Le signal d'avertissement indique au conducteur une manipulation erronée du moyen de commande 14 de l'embrayage 12. Il est émis tant que l'utilisateur actionne le moyen de commande 14. On notera que l'émission du signal d'avertissement est désactivée une fois que l'actionnement du moyen de commande 14 n'est plus détecté, notamment lorsque la pédale à pied est en position de repos.

En complément, dans une variante, il est prévu l'application d'une mesure de traitement du patinage. En cas d'occurrence de la première, deuxième et troisième détection et, de plus, d'une quatrième détection 24 conditionnée à une détection d'un couple moteur du moteur thermique 13 supérieur à une valeur de couple prédéterminée, le procédé comprend en outre la limitation, à une étape 25, de la valeur du couple moteur maximum à une mesure du couple moteur moyen lors de la deuxième détection 21. De plus, la mesure du couple moteur moyen est diminuée d'un coefficient de sécurité pour la limitation de la valeur du couple moteur maximal. Le signal d'avertissement résultant de la première, deuxième et troisième détection 20, 21, 22 est également émis lors de la limitation 25. A une étape 26, si l'événement de la quatrième détection 24 n'a pas lieu, le procédé n'applique pas la limitation de couple et seul le signal d'avertissement est émis.

L'invention s'applique à tout type de véhicule automobile dont le groupe motopropulseur est équipé d'un embrayage et comporte un superviseur de contrôle apte à exécuter des fonctions logicielles de pilotage, et plus spécifiquement de contrôle du patinage de l'embrayage.

## Revendications

1. Procédé de contrôle de patinage d'un embrayage (12), couplant dans une chaine de traction d'un véhicule automobile un moteur thermique (13) et une boite de vitesses (11), lequel est piloté par le conducteur par un moyen de commande (14), par exemple une pédale à pied, le procédé comprenant au moins une première détection (20) du patinage et une deuxième détection (21) de l'actionnement du moyen de commande (14) et, en cas d'occurrence simultanée de la première et de la deuxième détection, l'émission (25 ; 26) d'un signal d'avertissement indiquant une manipulation erronée du moyen de commande (14), **caractérisé en ce que** la deuxième détection (21) est conditionnée par la mesure d'au moins deux actionnements distincts du moyen de commande (14) séparés d'un intervalle de temps inférieur à un premier seuil de temps prédéterminé.

2. Procédé selon la revendication 1, **caractérisé en ce que** la mesure de chacun desdits au moins deux actionnements distincts est inférieure à une valeur d'actionnement prédéterminé.

3. Procédé selon la revendication 1 ou 2, **caractérisé en ce que** la première détection (20) du patinage est conditionnée par la détection d'une durée du patinage supérieure à un deuxième seuil de temps prédéterminé.

4. Procédé selon la revendication 3, **caractérisé en ce que** la première détection (20) du patinage est conditionnée par la détection d'une durée du patinage inférieure à un troisième seuil de temps prédéterminé.

5. Procédé selon l'une quelconque des revendications 1 à 4, **caractérisé en ce que** la première détection (20) du patinage est conditionnée par la détection d'une différence entre le régime d'un vilebrequin (17) du moteur thermique (13) et le régime d'un arbre primaire (18) de la boite de vitesses (11).

6. Procédé selon l'une quelconque des revendications 1 à 5, **caractérisé en ce que** la première détection (20) du patinage est conditionnée par la détection d'une température d'huile et d'une température de liquide de refroidissement du moteur thermique (13) supérieures à un premier et un deuxième seuil de température respectivement.

7. Procédé selon l'une quelconque des revendications 1 à 6, **caractérisé en ce que** l'émission (25 ; 26) du signal d'avertissement est désactivée lorsque que l'actionnement du moyen de commande (14) n'est plus détecté, notamment lorsque la pédale à pied est en position de repos.

8. Procédé selon l'une quelconque des revendications 1 à 7, **caractérisé en ce qu'**il comprend en outre une troisième détection (22) d'un état fermé de la chaine de traction conditionnée par la détection de l'engagement d'un rapport de vitesse de la boite de vitesses (11).

9. Procédé selon l'une quelconque des revendications 1 à 8, **caractérisé en ce qu'**en cas d'occurrence d'une quatrième détection (24) conditionnée à une détection d'un couple moteur du moteur thermique (13) supérieur à une valeur de couple prédéterminée, le procédé comprend en outre la limitation (25) de la valeur du couple moteur maximum à une mesure du couple moteur moyen lors de la deuxième détection (21), et **en ce que** la mesure du couple moteur moyen est diminuée d'un coefficient de sécurité.

10. Véhicule automobile comprenant une chaine de traction, laquelle comprend un moteur thermique de traction (13), une boite de vitesses (11) et un embrayage (12) couplant le moteur thermique et la boite de vitesses, un moyen de commande (14) pour piloter l'embrayage, par exemple une pédale à pied, et un superviseur de contrôle (10), dans lequel le superviseur de contrôle est adapté pour la mise en œuvre le procédé selon l'une quelconque des revendications 1 à 9.

## Patentansprüche

1. Verfahren zur Steuerung des Schlupfs einer Kupplung (12), die in einem Antriebsstrang eines Kraftfahrzeugs eine Brennkraftmaschine (13) und ein Schaltgetriebe (11) kuppelt, das von einem Fahrer durch ein Steuermittel (14), zum Beispiel ein Fußpedal, gesteuert wird, wobei das Verfahren mindestens eine erste Erfassung (20) des Schlupfs und eine zweite Erfassung (21) der Betätigung des Steuermittels (14) umfasst, und, im Fall des gleichzeitigen Auftretens der ersten und der zweiten Erfassung, das Senden (25; 26) eines Warnsignals, das eine Fehlmanipulation des Steuermittels (14) angibt, **dadurch gekennzeichnet, dass** die zweite Erfassung (21) von dem von mindestens zwei getrennten Betätigungen des Steuermittels (14), die durch ein Zeitintervall getrennt sind, das kleiner ist als ein erster Zeitschwellenwert, abhängt.

2. Verfahren nach Anspruch 1, **dadurch gekennzeichnet, dass** die Messung der mindestens zwei getrennten Betätigungen kleiner ist als ein vorbestimmter Betätigungswert.

3. Verfahren nach Anspruch 1 oder 2, **dadurch gekennzeichnet, dass** die erste Erfassung (20) des Schlupfs von der Erfassung einer Schlupfdauer abhängt, die größer ist als ein zweiter vorbestimmter Zeitschwellenwert.

4. Verfahren nach Anspruch 3, **dadurch gekennzeichnet, dass** die erste Erfassung (20) des Schlupfs von der Erfassung einer Schlupfdauer abhängt, die kleiner ist als ein dritter vorbestimmter Zeitschwellenwert.

5. Verfahren nach einem der Ansprüche 1 bis 4, **dadurch gekennzeichnet, dass** die erste Erfassung (20) des Schlupfs von der Erfassung eines Unterschieds zwischen der Kurbelwellendrehzahl (17) der Brennkraftmaschine (13) und der Drehzahl einer Primärwelle (18) des Schaltgetriebes (11) abhängt.

6. Verfahren nach einem der Ansprüche 1 bis 5, **dadurch gekennzeichnet, dass** die erste Erfassung (20) des Schlupfs von der Erfassung einer Öltemperatur und einer Kühlflüssigkeitstemperatur der Brennkraftmaschine (13), die größer sind als jeweils ein erster und ein zweiter Temperaturschwellenwert, abhängt.

7. Verfahren nach einem der Ansprüche 1 bis 6, **dadurch gekennzeichnet, dass** das Senden (25; 26) des Warnsignals deaktiviert wird, wenn das Betätigen des Steuermittels (14) nicht mehr erfasst wird, insbesondere, wenn das Fußpedal in Ruheposition ist.

8. Verfahren nach einem der Ansprüche 1 bis 7, **dadurch gekennzeichnet, dass** es außerdem eine dritte Erfassung (22) eines geschlossenen Zustands des Antriebsstrangs umfasst, die von dem Erfassen des Einlegens eines Gangs des Schaltgetriebes (11) abhängt.

9. Verfahren nach einem der Ansprüche 1 bis 8, **dadurch gekennzeichnet, dass** im Fall des Auftretens einer vierten Erfassung (24), die von einem Erfassen eines Brennkraftmaschinendrehmoments (13) abhängt, das größer ist als ein vorbestimmter Drehmomentwert, das Verfahren außerdem die Einschränkung (25) des maximalen Maschinendrehmomentwerts auf eine Messung des mittleren Maschinendrehmoments bei der zweiten Erfassung (21) umfasst, und dass die Messung des mittleren Maschinendrehmoments um einen Sicherheitskoeffizienten verringert wird.

10. Kraftfahrzeug, das einen Antriebsstrang umfasst, der eine Traktionsbrennkraftmaschine (13) ein Schaltgetriebe (11) und eine Kupplung (12) umfasst, die die Brennkraftmaschine und das Schaltgetriebe kuppelt, ein Steuermittel (14) zum Steuern der Kupplung, zum Beispiel ein Fußpedal, und eine Kontrollüberwachungsvorrichtung (10), wobei die Kontrollüberwachungsvorrichtung für das Umsetzen des Verfahrens nach einem der Ansprüche 1 bis 9 angepasst ist.

## Claims

1. A method for controlling slip of a clutch (12), coupling in a powertrain of a motor vehicle a heat engine (13) and a gearbox (11), which is controlled by the driver by a control means (14), for example a foot pedal, the method including at least a first detection (20) of the slip and a second detection (21) of the actuation of the control means (14) and, in the event of simultaneous occurrence of the first and the second detection, the emission (25; 26) of a warning signal indicating an erroneous manipulation of the control means (14), **characterized in that** the second detection (21) is conditioned by the measurement of at least two distinct actuations of the control means (14) separated by a time interval less than a first predetermined time threshold.

2. The method according to Claim 1, **characterized in that** the measurement of each of said at least two distinct actuations is less than a predetermined actuation value.

3. The method according to Claim 1 or 2, **characterized in that** the first detection (20) of the slip is conditioned by the detection of a duration of the slip greater than a second predetermined time threshold.

4. The method according to Claim 3, **characterized in that** the first detection (20) of the slip is conditioned by the detection of a duration of the slip less than a third predetermined time threshold.

5. The method according to any one of Claims 1 to 4, **characterized in that** the first detection (20) of the slip is conditioned by the detection of a difference between the speed of a crankshaft (17) of the heat engine (13) and the speed of a primary shaft (18) of the gearbox (11).

6. The method according to any one of Claims 1 to 5, **characterized in that** the first detection (20) of the slip is conditioned by the detection of an oil temperature and a cooling liquid temperature of the heat engine (13) which are greater than a first and a second temperature threshold respectively.

7. The method according to any one of Claims 1 to 6, **characterized in that** the emission (25; 26) of the warning signal is deactivated when the actuation of the control means (14) is no longer detected, in particular when the foot pedal is in rest position.

8. The method according to any one of Claims 1 to 7, **characterized in that** it further includes a third detection (22) of a closed state of the powertrain conditioned by the detection of the engagement of a gear ratio of the gearbox (11).

9. The method according to any one of Claims 1 to 8, **characterized in that** in the event of the occurrence of a fourth detection (24) conditioned to a detection of an engine torque of the heat engine (13) greater than a predetermined torque value, the method further includes the limitation (25) of the value of the maximum engine torque to a mean measurement of the engine torque at the second detection (21), and **in that** the measurement of the mean engine torque is reduced by a safety coefficient.

10. A motor vehicle including a powertrain, which includes a traction heat engine (13), a gearbox (11) and a clutch (12) coupling the heat engine to the gearbox, a control means (14) for controlling the clutch, for example a foot pedal, and a monitoring supervisor (10), in which the monitoring supervisor is adapted for the implementation of the method according to any one of Claims 1 to 9.
